# EUROPEAN PATENT APPLICATION

(11) **EP 4 746 568 A1**
(43) Date of publication of application: **20.05.2026**
(21) Application number: 23946258.3
(22) Date of filing: 27.07.2023
(51) Int. Cl.: H04W 74/08

(54) **RESOURCE CONFIGURATION METHOD, AND COMMUNICATION APPARATUS**

(71) Applicant: Huawei Technologies Co., Ltd., Shenzhen, Guangdong 518129 (CN)
(72) Inventor: WANG, Lei, Shenzhen, Guangdong 518129 (CN); MA, Jianglei, Shenzhen, Guangdong 518129 (CN); BI, Xiaoyan, Shenzhen, Guangdong 518129 (CN)
(74) Representative: Maiwald GmbH
(86) International application number: PCT/CN2023/109569
(87) International publication number: WO 2025/020172

(57) **Abstract**

A resource configuration method and a communication apparatus are disclosed. In the method, a network device configures N PRACH resource sets for a terminal device; and the terminal device performs, based on first sequence information, a random access attempt by sequentially using M PRACH resource sets in the N PRACH resource sets, where the first sequence information is for determining a sequence of performing random access attempt by using the M PRACH resource sets. In the method, different PRACH resource sets may match terminal devices having different access capabilities, to improve access of multiple types of terminals. In addition, a plurality of PRACH resource sets are configured, and a quantity of devices that use each PRACH resource set to perform access is reduced. Therefore, PRACH resources configured in each PRACH resource set in time domain and/or frequency domain may be sparse, to reduce a quantity of PRACH resources configured in unit time, thereby improving resource utilization.

## Description

### TECHNICAL FIELD

Embodiments of this application relate to the communication field, and more specifically, to a resource configuration method and a communication apparatus.

### BACKGROUND

In an existing cellular mobile communication system, terminal devices in various different use scenarios need to initiate random access (random access) in various scenarios. A network device may configure a physical random access channel (physical random access channel, PRACH) resource set in an uplink slot for a terminal device in a cell. The PRACH resource set includes a plurality of periodically configured PRACH resource subsets, each PRACH resource subset includes a plurality of PRACH resources, and the PRACH resources in each PRACH resource set have a same size. In a random access process, the terminal device may send a preamble (preamble) signal to the network device on a PRACH resource in the PRACH resource set. Therefore, a PRACH resource is also referred to as a random access channel occasion (random access channel occasion, RO).

There may be various types of terminals in a cell, including low-cost terminals for machine type communication, high-performance terminals like customer premise equipment (customer premise equipment, CPE) or fixed wireless access (fixed wireless access, FWA), and new types of terminals having positioning and sensing capabilities. Different types of terminals have distinct access capabilities. For example, for terminal devices having a strong access capability, ROs that occupy a few resources can achieve access. However, to cover low-cost terminals or terminals having a weak access capability, the network device needs to configure, for the terminal devices, ROs that occupy more resources, to support access of all the types of terminals. Consequently, this in turn increase access overheads of the terminal devices having strong access capability. In addition, if more terminal devices are used, to reduce an access contention probability among terminal devices, more PRACH resources need to be configured in unit time, where for example, more dense PRACH resources may be configured in time domain and/or frequency domain. Consequently, resource utilization is low.

### SUMMARY

Embodiments of this application provide a resource configuration method and a communication apparatus, to improve access of multiple types of terminals, and improve resource utilization.

According to a first aspect, a resource configuration method is provided. The method may be performed by a terminal device, or may be performed by a component (for example, a chip or a circuit) of the terminal device. This is not limited herein. For ease of description, the following uses an example in which the terminal device performs execution for description. However, it should be noted that, the following actions performed by the terminal device may alternatively be performed by the component (for example, the chip or the circuit) of the terminal device. In other words, the terminal device in the method may be replaced with the component of the terminal device.

The method may include: The terminal device receives first information from a network device, where the first information includes configuration information of N physical random access channel PRACH resource sets, and N is an integer greater than 1; and the terminal device performs, based on first sequence information, a random access attempt by using a part or all of M PRACH resource sets, where the M PRACH resource sets belong to the N PRACH resource sets, the first sequence information is for determining a sequence in which the terminal device performs random access attempt by using the M PRACH resource sets, and M is less than or equal to N.

In the foregoing technical solution, the network device may configure a plurality of PRACH resource sets for the terminal device, and the terminal device may perform an access attempt sequentially based on the first sequence information. In the method, different PRACH resource sets may match terminal devices having different access capabilities, to improve access of multiple types of terminals, and improve resource utilization. The beneficial effects are described by using an example. The first sequence information is information about sorting M PRACH resources in ascending order of overheads of ROs. A terminal device having a strong access capability may select, based on a first sequence, to use a PRACH resource set corresponding to an RO with low overheads to attempt to perform access, to reduce access overheads of the device having the strong access capability. In addition, the plurality of PRACH resource sets are configured, and a quantity of devices that use each PRACH resource set to perform access is reduced. Therefore, PRACH resources configured in each PRACH resource set in time domain and/or frequency domain may be sparse, to reduce a quantity of PRACH resources configured in unit time, thereby improving resource utilization.

In some implementations of the first aspect, the configuration information of the PRACH resource set includes resource parameters corresponding to the PRACH resource set, and the resource parameters include a format parameter of a preamble signal, and a time and/or frequency resource parameter of the PRACH resource set.

In some implementations of the first aspect, the first information further includes the first sequence information, and the first sequence information indicates a sequence of performing random access attempt by using the N PRACH resource sets.

In some implementations of the first aspect, the first sequence information is determined based on a first parameter corresponding to the N PRACH resource sets, and the first parameter includes at least one of the resource parameters.

In some implementations of the first aspect, the method further includes: The terminal device determines the first sequence information according to a first rule, where the first rule indicates to sort PRACH resource sets based on a first parameter, and the first parameter includes at least one of the resource parameters.

In some implementations of the first aspect, that the terminal device determines the first sequence information according to the first rule includes: The terminal device determines the first sequence information based on the first rule and a capability of the terminal device.

In some implementations of the first aspect, the first rule is a rule indicated by the network device, or the first rule is a predefined rule.

In some implementations of the first aspect, the method further includes: The terminal device determines the M PRACH resource sets in the N PRACH resource sets based on the capability of the terminal device.

In some implementations of the first aspect, the configuration information of the PRACH resource set further includes information about a random access scenario to which the PRACH resource set is applicable, and information about a random access scenario corresponding to any one of the M PRACH resource sets matches information about a random access scenario initiated by the terminal device.

In the foregoing implementations, multiple types of terminal devices may determine, based on information about random access scenarios currently initiated by the terminal devices, to perform random access attempts by using PRACH resource sets that match the terminal devices. In the implementations, access performance can be enhanced.

In some implementations of the first aspect, the information about the random access scenario to which the PRACH resource set is applicable includes an identifier of the random access scenario to which the PRACH resource set is applicable, and/or a random access type to which the PRACH resource set is applicable.

In some implementations of the first aspect, the configuration information of the PRACH resource set further includes a parameter of a device to which the PRACH resource set is applicable, and a parameter of a device corresponding to any one of the M PRACH resource sets matches a parameter of the terminal device.

In the foregoing implementations, the multiple types of terminal devices may determine, based on capabilities and/or service requirements of the terminal devices, to perform random access attempts by using the PRACH resource sets that match the terminal devices. In the implementations, the access performance can be enhanced.

In some implementations of the first aspect, the parameter of the device to which the PRACH resource set is applicable includes a capability parameter and/or a service requirement parameter of the device to which the PRACH resource set is applicable.

In some implementations of the first aspect, the capability parameter of the device includes at least one of the following parameters: a positioning capability level, a range of a quantity of transmit antennas, or a power saving level.

In some implementations of the first aspect, the service requirement parameter of the device includes at least one of the following parameters: a priority level of a service, a latency requirement level of the service, and a reliability level of the service.

In some implementations of the first aspect, the method further includes: The terminal device sends a first preamble signal to the network device on a first PRACH resource set, where the first PRACH resource set is one of the M PRACH resource sets; and the terminal device receives a random access response signal from the network device, where a parameter of the random access response signal is determined based on the capability of the terminal device, and the capability of the terminal device is determined based on the first PRACH resource set.

According to a second aspect, a resource configuration method is provided. The method may be performed by a network device, or may be performed by a component (for example, a chip or a circuit) of the network device. This is not limited herein. For ease of description, the following uses an example in which the network device performs execution for description. However, it should be noted that, the following actions performed by the network device may alternatively be performed by the component (for example, the chip or the circuit) of the network device. In other words, the network device in the method may be replaced with the component of the network device.

The method includes: The network device sends first information to a terminal device, where the first information includes configuration information of N physical random access channel PRACH resource sets and first sequence information, the first sequence information indicates a sequence of performing random access attempt by using the N PRACH resource sets, and N is an integer greater than 1; and the network device sends the first information to a terminal device.

For beneficial effects of the second aspect, refer to the descriptions in the first aspect. Details are not described herein again.

In some implementations of the second aspect, the configuration information of the PRACH resource set includes resource parameters corresponding to the PRACH resource set, and the resource parameters include a format parameter of a preamble signal, and a time and/or frequency resource parameter of the PRACH resource set.

In some implementations of the second aspect, the first sequence information is determined based on a first parameter corresponding to the N PRACH resource sets, and the first parameter includes at least one of the resource parameters.

In some implementations of the second aspect, the configuration information of the PRACH resource set further includes information about a random access scenario to which the RO resource is applicable.

In some implementations of the second aspect, the information about the random access scenario to which the PRACH resource set is applicable includes an identifier of the random access scenario to which the PRACH resource set is applicable, and/or a random access type to which the PRACH resource set is applicable.

In some implementations of the second aspect, the configuration information of the PRACH resource set further includes a parameter of a device to which the PRACH resource set is applicable.

In some implementations of the second aspect, the parameter of the device to which the PRACH resource set is applicable includes a capability parameter and/or a service requirement parameter of the device to which the PRACH resource set is applicable.

In some implementations of the second aspect, the capability parameter of the device includes at least one of the following parameters: a positioning capability level, a range of a quantity of transmit antennas, or a power saving level.

In some implementations of the second aspect, the service requirement parameter of the device includes at least one of the following parameters: a priority level of a service, a latency requirement level of the service, and a reliability level of the service.

In some implementations of the second aspect, the method further includes: The network device receives a first preamble signal from the terminal device on a first PRACH resource set, where the first PRACH resource set is one of the N PRACH resource sets; and the network device sends a random access response signal to the terminal device, where a parameter of the random access response signal is determined based on a capability of the terminal device, and the capability of the terminal device is determined based on the first PRACH resource set.

According to a third aspect, a resource configuration method is provided. The method may be performed by a terminal device, or may be performed by a component (for example, a chip or a circuit) of the terminal device. This is not limited herein. For ease of description, the following uses an example in which the terminal device performs execution for description. However, it should be noted that, the following actions performed by the terminal device may alternatively be performed by the component (for example, the chip or the circuit) of the terminal device. In other words, the terminal device in the method may be replaced with the component of the terminal device.

The method includes: The terminal device receives configuration information of N physical random access channel PRACH resource sets from a network device, where the configuration information of the PRACH resource set includes information about a random access scenario to which the PRACH resource set is applicable, and N is an integer greater than 1; the terminal device determines a first PRACH resource set in the N PRACH resource sets, where information about a random access scenario corresponding to the first PRACH resource set matches information about a random access scenario initiated by the terminal device; and the terminal device performs random access based on the first PRACH resource set.

According to a fourth aspect, a resource configuration method is provided. The method may be performed by a network device, or may be performed by a component (for example, a chip or a circuit) of the network device. This is not limited herein. For ease of description, the following uses an example in which the network device performs execution for description. However, it should be noted that, the following actions performed by the network device may alternatively be performed by the component (for example, the chip or the circuit) of the network device. In other words, the network device in the method may be replaced with the component of the network device.

The method includes: The network device determines configuration information of N physical random access channel PRACH resource sets, where the configuration information of the PRACH resource set includes information about a random access scenario to which the PRACH resource set is applicable, and N is an integer greater than 1; and the network device sends the configuration information of the N physical random access channel PRACH resource sets to a terminal device.

In some implementations of the third aspect or the fourth aspect, the information about the random access scenario to which the PRACH resource set is applicable includes an identifier of the random access scenario to which the PRACH resource set is applicable, and/or a random access type to which the PRACH resource set is applicable.

According to a fifth aspect, a resource configuration method is provided. The method may be performed by a terminal device, or may be performed by a component (for example, a chip or a circuit) of the terminal device. This is not limited herein. For ease of description, the following uses an example in which the terminal device performs execution for description. However, it should be noted that, the following actions performed by the terminal device may alternatively be performed by the component (for example, the chip or the circuit) of the terminal device. In other words, the terminal device in the method may be replaced with the component of the terminal device.

The method includes: The terminal device receives configuration information of N physical random access channel PRACH resource sets from a network device, where the configuration information of the PRACH resource set includes a parameter of a device to which the PRACH resource set is applicable, and N is an integer greater than 1; the terminal device determines a first PRACH resource set in the N PRACH resource sets, where a parameter of a device corresponding to the first PRACH resource set matches a parameter of the terminal device; and the terminal device performs random access based on the first PRACH resource set.

According to a sixth aspect, a resource configuration method is provided. The method may be performed by a network device, or may be performed by a component (for example, a chip or a circuit) of the network device. This is not limited herein. For ease of description, the following uses an example in which the network device performs execution for description. However, it should be noted that, the following actions performed by the network device may alternatively be performed by the component (for example, the chip or the circuit) of the network device. In other words, the network device in the method may be replaced with the component of the network device.

The method includes: The network device determines configuration information of N physical random access channel PRACH resource sets, where the configuration information of the PRACH resource set includes a parameter of a device to which the PRACH resource set is applicable, and N is an integer greater than 1; and the network device sends the configuration information of the N physical random access channel PRACH resource sets to a terminal device.

In some implementations of the fifth aspect or the sixth aspect, the parameter of the device to which the PRACH resource set is applicable includes a capability parameter and/or a service requirement parameter of the device to which the PRACH resource set is applicable.

In some implementations of the fifth aspect or the sixth aspect, the capability parameter of the device includes at least one of the following parameters: a positioning capability level, a range of a quantity of transmit antennas, or a power saving level.

In some implementations of the fifth aspect or the sixth aspect, the service requirement parameter of the device includes at least one of the following parameters: a priority level of a service, a latency requirement level of the service, and a reliability level of the service.

In some implementations of the fifth aspect or the sixth aspect, the configuration information of the PRACH resource set includes physical random access channel resource parameters corresponding to the PRACH resource set, and the resource parameters include a format parameter of a preamble signal, and a time and/or frequency resource parameter of the PRACH resource set.

According to a seventh aspect, a communication apparatus is provided. The apparatus is configured to perform the method provided in the first aspect, the third aspect, or the fifth aspect. Specifically, the apparatus may include a unit and/or a module, for example, a processing unit and/or a communication unit, configured to perform the method according to any one of the first aspect, the third aspect, the fifth aspect, or the possible implementations of the first aspect, the third aspect, or the fifth aspect.

In an implementation, the apparatus is a terminal device. When the apparatus is the terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus is configured to perform the method provided in the second aspect, the fourth aspect, or the sixth aspect. Specifically, the apparatus may include a unit and/or a module, for example, a processing unit and/or a communication unit, configured to perform the method according to any one of the second aspect, the fourth aspect, the sixth aspect, or the possible implementations of the second aspect, the fourth aspect, or the sixth aspect.

In an implementation, the apparatus is a network device. When the apparatus is the network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, to cause the communication apparatus to perform the method according to any one of the first aspect, the third aspect, the fifth aspect, or the possible implementations of the first aspect, the third aspect, or the fifth aspect.

In an implementation, the apparatus is a terminal device.

In another implementation, the apparatus is a chip, a chip system, or a circuit used in a terminal device.

According to a tenth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, to cause the communication apparatus to perform the method according to any one of the second aspect, the fourth aspect, the sixth aspect, or the possible implementations of the second aspect, the fourth aspect or the sixth aspect.

In an implementation, the apparatus is a network device.

In another implementation, the apparatus is a chip, a chip system, or a circuit used in a network device.

According to an eleventh aspect, a processor is provided, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code executed by a device, and the program code is used to perform the method according to any one of the first aspect to the sixth aspect and the possible implementations of the first aspect to the sixth aspect.

According to a thirteenth aspect, a computer program product including instructions is provided. When the computer program product is run on a computer, the computer is caused to perform the method according to any one of the first aspect to the sixth aspect and the possible implementations of the first aspect to the sixth aspect.

According to a fourteenth aspect, a chip is provided. The chip includes a processor and a communication interface. The processor reads, through the communication interface, instructions stored in a memory, to perform the method according to any one of the first aspect to the sixth aspect and the possible implementations of the first aspect to a sixteenth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect to the sixth aspect and the possible implementations of the first aspect to the sixth aspect.

According to a fifteenth aspect, a communication system is provided. The communication system includes the communication apparatuses shown in the ninth aspect and the tenth aspect.

### BRIEF DESCRIPTION OF DRAWINGS

FIG. 1 is a diagram of a communication system according to an embodiment of this application;
FIG. 2 is a diagram of five preamble signal formats in LTE;
FIG. 3 is a schematic flowchart of one contention-based random access;
FIG. 4 is a schematic flowchart of a resource configuration method according to this application;
FIG. 5 is a diagram of a PRACH resource set #1;
FIG. 6 is a diagram of a PRACH resource set #2 and a PRACH resource set #3 that are configured according to the method provided in this application;
FIG. 7 is a block diagram of a communication apparatus 200 according to this application; and
FIG. 8 is a diagram of a structure of a communication apparatus 300 according to this application.

### DESCRIPTION OF EMBODIMENTS

The following describes technical solutions of embodiments in this application with reference to accompanying drawings.

The technical solutions in embodiments of this application may be applied to various communication systems, for example, wireless communication systems such as 5th generation (5th generation, 5G), long term evolution (long term evolution, LTE), internet of things (internet of things, IoT), and wireless-fidelity (wireless-fidelity, Wi-Fi), or another wireless communication system in the future like a next generation wireless communication system.

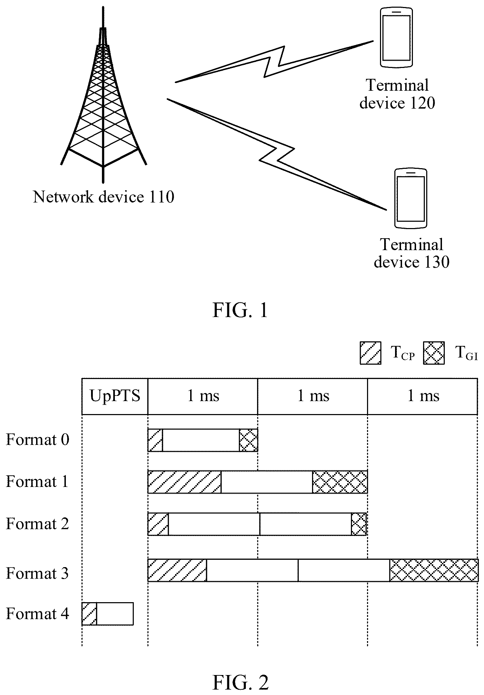

FIG. 1 is a diagram of a communication system according to an embodiment of this application. A communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link to exchange information. It may be understood that, the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved nodeB (evolved NodeB, eNodeB), a next generation nodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are split and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. In this way, some functions of a radio access network device may be implemented by a plurality of network function entities. These network function entities may be network elements in a hardware device, may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that, the network device may be a device including one or more of a CU node, a DU node, and an AAU node. In addition, the CU may be classified into a network device in the radio access network (radio access network, RAN), or the CU may be classified into a network device in a core network (core network, CN). This is not limited in this application. For another example, in a vehicle-to-everything (vehicle-to-everything, V2X) technology, an access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, an apparatus configured to implement a function of the network device may be the network device, or may be an apparatus that can support the network device in implementing the function, for example, a chip system or a combined device or component that can implement a function of the access network device. The apparatus may be installed in the network device. In embodiments of this application, the chip system may include a chip, or may include a chip and another discrete device.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine type communication, M2M/MTC) communication, internet of things, virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, and a robot. For example, the terminal device may be a handheld terminal in the cellular communication, a communication device in the D2D, an internet of things device in the MTC, a surveillance camera in the smart transportation and the smart city, a communication device in the uncrewed aerial vehicle, or the like.

The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combined device or component that can implement a function of the terminal device. The apparatus may be installed in the terminal device.

In an existing cellular mobile communication system, for various different purposes, a terminal device needs to initiate random access (random access) in various scenarios. The random access includes four-step random access or two-step random access. In such two random access processes, a first step is that the terminal device sends a preamble (preamble) signal to a network device. The preamble signal may have a plurality of formats. A format parameter of the preamble signal includes a cyclic prefix (cyclic prefix, CP) length T_{CP} of an orthogonal frequency division multiplexing (orthogonal frequency division multiplexing, OFDM) symbol, a subcarrier spacing of the OFDM symbol, a quantity of repetitions of an OFDM signal, a preamble sequence length for generating the preamble signal, a guard interval (guard interval, GI) length T_{GI}, and the like.

FIG. 2 is a diagram of five preamble signal formats in LTE, which are a format 0, a format 1, a format 2, a format 3, and a format 4. In each format, a part padded with left slashes is T_{CP}, a length and a quantity of occurrences of a part that is not padded are respectively determined by a subcarrier spacing and a quantity of repetitions in a corresponding format parameter, and a part padded with grids is T_{GI}. It can be learned that, the format 0 needs to occupy one uplink subframe, the format 1 and the format 2 each need to occupy two uplink subframes, and the format 3 needs to occupy three uplink subframes to complete transmission. Particularly, the format 4 can be used only in an uplink pilot timeslot (uplink pilot timeslot, UpPTS).

The network device may configure one preamble signal format for one cell. In a same format, each cell supports a plurality of preamble signals. For example, in an LTE system or a new radio (new radio, NR) system, each cell supports a maximum of 64 preamble signals. In addition, depending on whether the preamble signal is selected by the terminal device from a preset preamble signal set or specified by the network device, random access is further classified into contention-based random access (contention-based random access, CBRA) and contention-free random access (contention-free random access, CFRA). For example, random access initiated by the terminal device from an idle state is the CBRA, and random access initiated by the terminal device for inter-cell handover may be the CFRA or the CBRA.

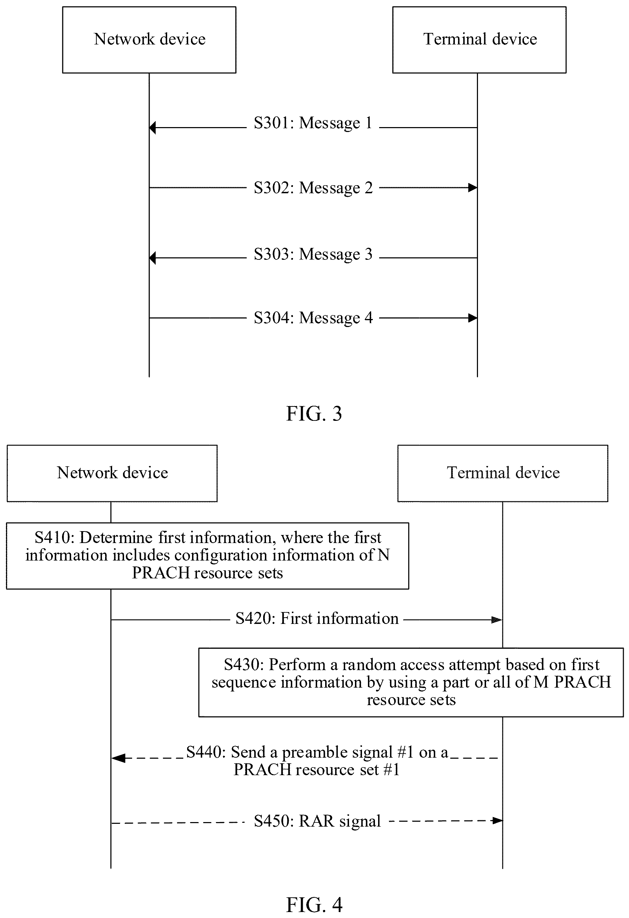

FIG. 3 is a schematic flowchart of one contention-based random access (that is, four-step random access). The following describes in detail steps included in the procedure.

S301: A terminal device sends a message 1 (Msg1) to a network device. Correspondingly, the network device receives the Msg1.

Before the message 1 is sent, in an existing LTE or NR system, the network device configures a PRACH resource set for the terminal device in a cell based on a size of the cell and signal strength of the cell. Configuration information of the PRACH resource set includes a format parameter of a preamble signal and a time/frequency resource parameter occupied by the PRACH resource set. Specific configuration manners of the parameters in the configuration information of the PRACH resource set are not limited in this application.

Optionally, the network device indicates, to the terminal device based on a configured RO, a format parameter of a preamble signal that can be used. For example, when a length of the RO in time domain is 1 ms, the format parameter that is configured by the network device and that is of the preamble signal may indicate a format 0. When the length of the RO in time domain is 2 ms, the format parameter that is configured by the network device and that is of the preamble signal may indicate a format 1 or a format 2.

The terminal device selects, based on a system message received from the network device and a synchronization signal and PBCH block (synchronization signal and PBCH block, SSB) index selected by the terminal device, one of one or more ROs associated with the SSB index from the configured PRACH resource set, to send the preamble signal. After the RO is determined, the terminal device sends one preamble signal in the selected RO. It may be understood that, the preamble signal is the Msg1.

S302: The network device sends a message 2 (Msg2) to the terminal device. Correspondingly, the terminal device receives the Msg2.

After receiving a preamble sequence, the network device allocates, to a terminal, a time-frequency domain resource for sending the Msg2, scheduling information of Msg3, and the like. The Msg2 is also referred to as random access response (random access response, RAR) information. A RAR includes the scheduling information of the Msg3, that is, RAR uplink (uplink, UL) grant (grant) information.

S303: The terminal device sends the message 3 (Msg3) to the network device. Correspondingly, the network device receives the Msg3.

The Msg3 is sent on the time-frequency resource specified by using the Msg2 and carried on a physical uplink shared channel (physical uplink shared channel, PUSCH).

S304: The network device sends a message 4 (Msg4) to the terminal device. Correspondingly, the terminal device receives the Msg4.

The Msg4 is mainly used for contention resolution. When a plurality of terminal devices send a same preamble sequence by using a same RO to perform random access, the network device needs to determine a specific terminal device to be selected for current random access. In other words, after a random access process ends, only one terminal device can successfully perform access.

There are various types of terminals on an existing network, including low-cost terminals for machine type communication, high-performance terminals like customer premise equipment (customer premise equipment, CPE) or fixed wireless access (fixed wireless access, FWA), and new types of terminals having positioning and sensing capabilities. Different types of terminals have distinct access capabilities. To cover low-cost terminals or terminals having a weak access capability, a base station needs to configure many PRACHs for transmission of preamble signals, resulting in excessive overheads and low resource utilization. For example, for terminal devices having a strong access capability, ROs that occupy a few resources can achieve access. However, to cover low-cost terminals or terminals having a weak access capability, the network device needs to configure, for the terminal devices, ROs that occupy more resources, to support access of all the types of terminals. Consequently, access overheads of the terminal devices having a strong access capability increase. In addition, if more terminal devices are used, to avoid and reduce an access contention probability among terminal devices, more PRACH resources need to be configured in unit time, where for example, more dense PRACH resources may be configured in time domain and/or frequency domain. Consequently, the resource utilization is low.

In view of this, this application provides a resource configuration method, to effectively resolve the foregoing technical problems. The following describes in detail the method provided in this application with reference to FIG. 4.

FIG. 4 is a schematic flowchart of a resource configuration method according to this application. The method includes the following steps.

S410: A network device determines first information, where the first information includes configuration information of N PRACH resource sets, and N is an integer greater than 1.

Optionally, the configuration information of the PRACH resource set includes resource parameters corresponding to the PRACH resource set, and the resource parameters include a format parameter of a preamble signal, and a time and/or frequency resource parameter of the PRACH resource set. Specific configuration manners of the parameters in the configuration information of the PRACH resource set are not limited in this application.

It may be understood that, each of the N PRACH resource sets includes a periodically configured PRACH resource subset, each PRACH resource subset includes one or more RO resources, and all RO resources included in the PRACH resource set occupy a same resource size in time/frequency domain. For example, the format parameter of the preamble signal includes a cyclic prefix length of an OFDM symbol, a subcarrier spacing of the OFDM symbol, a quantity of repetitions of an OFDM signal, a cyclic shift (cyclic shift) interval, a sequence length for generating the preamble signal, a guard interval length, and the like.

In this embodiment of this application, one PRACH resource set may also be referred to as one set of PRACH resources, and the two expressions are interchangeable. This is not limited in this application.

S420: The network device sends the first information to a terminal device. Correspondingly, the terminal device receives the first information from the network device.

Then, after the terminal device has a random access requirement, S430 is performed.

S430: The terminal device performs, based on first sequence information, a random access attempt by using a part or all of M PRACH resource sets, where the M PRACH resource sets belong to the N PRACH resource sets, the first sequence information is for determining a sequence in which the terminal device performs random access attempt by using the M PRACH resource sets, and M is less than or equal to N.

When M is equal to N, the terminal device may perform the random access attempt based on the first sequence information by using the M PRACH resource sets, until the access succeeds. Specifically, a quantity of PRACH resource sets actually for performing random access attempt may be less than M. For example, if random access succeeds when the terminal device attempts to perform the random access based on the first sequence information by using an x^{th} PRACH resource set in the M PRACH resource sets, a PRACH resource set not used in the M PRACH resource sets is no longer used for the random access attempt, where x is less than N.

When M is less than N, the terminal device needs to first determine, in the N PRACH resource sets, the M PRACH resource sets for performing random access attempt, and then performs the random access attempt based on the first sequence information, until the access succeeds. Specifically, the quantity of PRACH resource sets actually for performing random access attempt may be less than M. For example, if random access succeeds when the terminal device attempts to perform the random access based on the first sequence information by using a y^{th} PRACH resource set in the M PRACH resource sets, a PRACH resource set not used in the M PRACH resource sets is no longer used for the random access attempt, where y is less than M.

In an implementation, the network device may indicate a use sequence of the N PRACH resource sets to the terminal device. For example, the first information further includes the first sequence information, and the first sequence information indicates a sequence of performing random access attempt by using the N PRACH resource sets. In this way, the terminal device determines, based on the first sequence information, the sequence of performing random access attempt by using the M PRACH resource sets.

Optionally, the first sequence information is determined by the network device based on a first parameter corresponding to the N PRACH resource sets, and the first parameter includes at least one of the resource parameters. For example, the network device may determine the first sequence information in ascending order of time-frequency resources occupied by one RO in the PRACH resource sets, or the network device may determine the first sequence information in ascending order of cyclic prefix lengths of OFDM symbols in format parameters of preamble signals corresponding to the PRACH resource sets.

In another implementation, the terminal device determines the first sequence information according to a first rule, where the first rule indicates to sort PRACH resource sets based on a first parameter, and the first parameter includes at least one of the resource parameters.

For example, in this implementation, the determined first sequence information may indicate a use sequence of the N PRACH resource sets, or the first sequence information may indicate a use sequence of the M PRACH resource sets.

For example, in this implementation, that the terminal device determines the first sequence information according to the first rule includes: The terminal device determines the first sequence information based on the first rule and a capability of the terminal device. For example, the first rule is a rule indicated by the network device, or the first rule is a predefined rule.

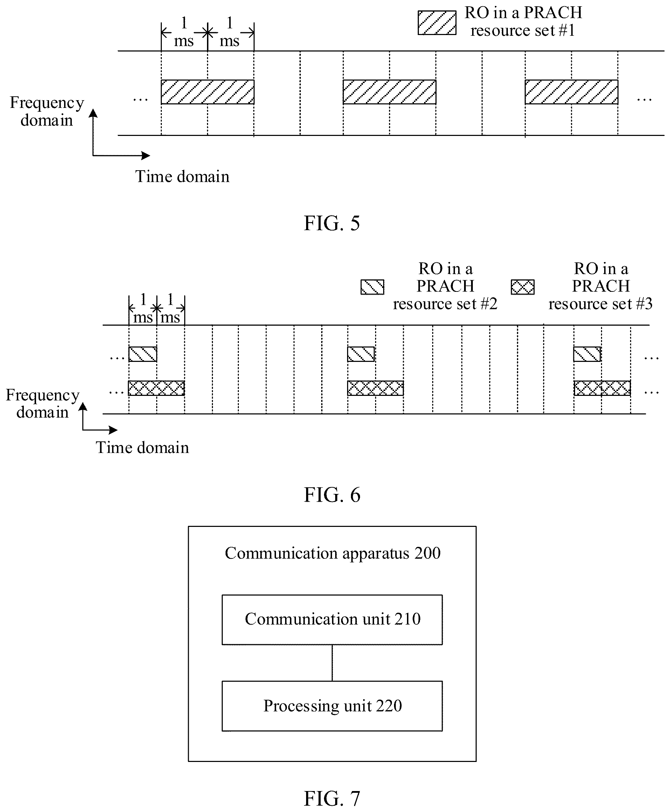

In the foregoing technical solution, the network device may configure a plurality of sets of PRACH resources for the terminal device, and the terminal device may perform an access attempt based on a first sequence by sequentially using different PRACH resource sets. In the method, access of multiple types of terminals can be improved, and resource utilization can be improved. The beneficial effects are described by using an example. It is assumed that a cell includes only two different types of terminal devices: a type-1 device and a type-2 device. The type-1 device has a strong access capability, and access can be met when an RO configured in a PRACH occupies 1 ms (that is, an RO with low overheads) in time domain. The type-2 device has a weak access capability, and access can be met when an RO configured in a PRACH occupies 2 ms (that is, an RO with high overheads) in time domain. It can be learned from the foregoing descriptions that, to cover the type-2 terminal, the configured RO needs to occupy 2 ms in time domain. In addition, because the type-1 device and the type-2 device need to use a same set of PRACH resources, to reduce an access contention probability of the terminal devices, more PRACH resources need to be configured in unit time. For example, there are 50 type-1 devices and 50 type-2 devices, and a PRACH resource set #1 shared by the type-1 devices and the type-2 devices is shown in FIG. 5. According to the solution provided in this application, as shown in FIG. 6, the network device may configure a PRACH resource set #2 for the type-1 device, and configure a PRACH resource set #3 for the type-2 device. An RO in the PRACH resource set #2 and an RO in the PRACH resource set #3 occupy a same resource as an RO in the PRACH resource set #1 in frequency domain, the RO configured in the PRACH resource set #2 occupies 1 ms in time domain, and the RO configured in the PRACH resource set #3 occupies 2 ms in time domain. In this way, access overheads of the type-1 device can be reduced. In addition, in comparison with the PRACH resource set #1, because a quantity of used access devices that correspond to the PRACH resource set #2 and the PRACH resource set #3 is reduced by half, a PRACH periodicity may be configured to be twice (that is, 8 ms) a periodicity of the PRACH resource set #1. It can be learned that, in duration (that is, 8 ms) corresponding to one PRACH periodicity corresponding to the PRACH resource set #2, resources occupied by the PRACH resource set #2 and the PRACH resource set #3 are less than resources occupied by the PRACH resource set #1. Therefore, in the method, the resource utilization can be improved.

It should be understood that, the RO with low overheads means that the RO occupies a small quantity of time-frequency resources, and the RO with high overheads means that the RO occupies a large quantity of time-frequency resources.

The following provides several possible specific implementations of determining the M PRACH resource sets. The following several implementations may be used separately or jointly. This is not limited in this application. However, it should be noted that, when M=1, the terminal device performs random access only on one determined PRACH resource set.

### Implementation 1

The terminal device determines the M PRACH resource sets in the N PRACH resource sets based on the capability of the terminal device. For example, when the terminal device has a weak access capability, the terminal device may exclude, from the N PRACH resource sets, a PRACH resource set that cannot meet an access requirement of the terminal device, and attempt to perform random access in a remaining PRACH resource set based on the first sequence information.

### Implementation 2

Optionally, the configuration information of the PRACH resource set further includes information about a random access scenario to which the PRACH resource set is applicable. The terminal device selects the M PRACH resource sets based on the information about the random access scenario to which the PRACH resource set is applicable, where information about a random access scenario corresponding to any one of the M PRACH resource sets matches information about a random access scenario initiated by the terminal device.

It should be noted that, after the terminal device determines the M PRACH resource sets, the quantity of PRACH resource sets actually for performing random access attempt may be less than M. For example, if random access succeeds when the terminal device attempts to perform the random access based on the first sequence information by using a y^{th} PRACH resource set in the M PRACH resource sets, a PRACH resource set not used in the M PRACH resource sets is no longer used for the random access attempt, where y is less than M. Optionally, the information about the random access scenario to which the PRACH resource set is applicable includes an identifier of the random access scenario to which the PRACH resource set is applicable, and/or a random access type to which the PRACH resource set is applicable.

For example, the random access type to which the PRACH resource set is applicable is CBRA or CFRA. For example, in the CFRA, a PRACH resource set corresponding to the RO with low overheads may be preferentially configured.

For example, specific random access scenarios may be as follows:
(1) Initial access from an RRC idle state (Initial access from RRC_IDLE) (CBRA).
(2) Initial access from an RRC inactive state (Transition from RRC_INACTIVE) (CBRA).
(3) RRC reestablishment for a radio link failure (RRC reestablishment for radio link failure) (CBRA).
(4) Uplink data arrival when out-of-synchronization (uplink data arrival when Out-of-Sync) (CBRA).
(5) No scheduled resource when uplink data arrival (No SR resources when uplink data arrival) (CBRA).
(6) Scheduled resource transmission failure (SR Transmission failure) (CBRA).
(7) On-demand system information request (On-demand SI Request) (CFRA or CBRA).
(8) Synchronous reconfiguration (Synchronous Reconfiguration) (CFRA or CBRA).
(9) Beam failure recovery (Beam Failure Recovery) (CFRA or CBRA).
(10) Downlink data arrival when out-of-synchronization (DL data arrival when Out-of-Sync) (CFRA).

For example, in the random access scenario (2), because the terminal retains previous synchronization information, the PRACH resource set corresponding to the RO with low overheads may be preferentially configured for the terminal device in this scenario. In the random access scenario (7), because the terminal device is in a synchronization state, the PRACH resource set corresponding to the RO with low overheads may also be preferentially configured.

Optionally, the CBRA or the CFRA in the brackets after each random access scenario represents a random access type corresponding to the random access scenario. For example, a random access type corresponding to the random access scenario (1) is the CBRA, and a random access type corresponding to the random access scenario (9) may be the CFRA or the CBRA. However, it should be noted that, in an actual random access scenario, one scenario can correspond to only one random access type.

### Implementation 3

Optionally, the configuration information of the PRACH resource set further includes a parameter of a device to which the PRACH resource set is applicable. The terminal device selects the M PRACH resource sets based on the parameter of the device to which the PRACH resource set is applicable, where a parameter of a device corresponding to any one of the M PRACH resource sets matches a parameter of the terminal device.

Optionally, the parameter of the device to which the PRACH resource set is applicable includes a capability parameter and/or a service requirement parameter of the device to which the PRACH resource set is applicable.

For example, the capability parameter of the device includes at least one of the following parameters.
(1) Positioning capability level. For example, a terminal device having a strong positioning capability may deduce a range of an uplink time offset based on positioning information of the terminal device and a location of the network device, to pre-compensate a part of the uplink time offset. Therefore, a PRACH resource set with a small CP length and a small cyclic shift interval in a format parameter of a preamble signal may be preferentially configured for the terminal device. Therefore, a positioning capability level of a PRACH resource set may be determined based on a CP length and a cyclic shift interval, where a PRACH resource set with a small CP length and a small cyclic shift interval corresponds to a high positioning capability level (applicable to a terminal device having a strong positioning capability), and a PRACH resource set with a large CP length and a large cyclic shift interval corresponds to a low positioning capability level (applicable to a terminal device having a weaker positioning capability). For example, the positioning capability level may be classified into K levels, where a level 1 represents a strongest positioning capability, a level K represents a weakest positioning capability. In this way, during random access, the terminal may select, based on positioning capability levels corresponding to the PRACH resource sets, a PRACH resource set that matches the positioning capability of the terminal device, to perform random access attempt.
(2) Range of a quantity of transmit antennas. For example, for a 6G terminal device, a quantity of transmit antennas greatly increases, to greatly improve a random access capability of the terminal device. A PRACH resource set corresponding to the RO with low overheads is preferentially configured for the terminal device. Therefore, the range of the quantity of transmit antennas may be determined based on overheads of an RO in a PRACH resource set. Optionally, the range of the quantity of antennas may be a quantity interval, or may correspond to a specific quantity. For example, the quantity of transmit antennas may be divided into three ranges, and each range corresponds to a different quantity of antennas. A range 1 represents 2 to 5 antennas, a range 2 represents 6 to 10 antennas, and a range 3 represents 10 to 21 antennas. In this way, during random access, the terminal device may select, based on ranges of quantities of transmit antennas corresponding to the PRACH resource sets, a PRACH resource set that matches the quantity of transmit antennas of the terminal device, to perform random access attempt.
(3) Power saving (power saving) level. For example, for a terminal device whose transmit power is limited, a PRACH resource set corresponding to the RO with high overheads may be preferentially configured, to ensure random access performance. In this way, during random access, the terminal may select, based on power saving levels corresponding to the PRACH resource sets, a PRACH resource set that matches the transmit power of the terminal device, to perform random access attempt.

For example, the service requirement parameter of the device includes at least one of the following parameters: a priority level of a service, a latency requirement level of the service, and a reliability level of the service. For example, a higher latency requirement level of a service indicates a shorter periodicity of a PRACH resource set, and indicates that the terminal device can perform access faster. Therefore, if a random access service of the terminal device has a high latency requirement, the terminal device may select a PRACH resource set with the high latency requirement level of the service, to perform random access attempt.

It may be understood that, the terminal device performs random access by using different PRACH resource sets, which is equivalent to implicitly reporting the capability and the service requirement level of the terminal device to the network device.

In the foregoing implementations, multiple types of terminal devices may determine, based on information about random access scenarios currently initiated by the terminal devices, and/or capabilities and/or service requirements of the terminal devices, to perform random access attempts by using PRACH resource sets that match the terminal devices. In the implementations, access performance can be enhanced.

In S430, the terminal device performs random access attempt sequentially in a random access sequence of the M PRACH resource sets. Assuming that a 1^{st} PRACH resource set that is determined in the M PRACH resource sets based on the first sequence information and that is for performing random access attempt is a PRACH resource set #1, the following describes in detail a process of performing random access based on the PRACH resource set #1.

Optionally, the method further includes the following steps.

S440: The terminal device sends a preamble signal #1 to the network device on an RO in the PRACH resource set #1.

It may be understood that, the network device does not know a specific PRACH resource set that is in the N PRACH resource sets and on which the terminal device sends the preamble signal. Therefore, the terminal device monitors, on the N PRACH resource sets, whether the preamble signal sent by the terminal device exists, and sends a RAR signal to the terminal device only when the preamble signal sent by the terminal device is received and successfully detected on a PRACH resource set. Then, after sending a preamble on a PRACH resource #1, the terminal device monitors a RAR on a time-frequency resource corresponding to a monitoring window with a length L.

For example, the network device receives and successfully detects the preamble signal #1 on the PRACH resource set #1, that is, S450 is performed.

For example, if the terminal device receives no RAR on the corresponding monitoring window, the terminal device may send the preamble signal again on the RO in the PRACH resource set #1, and then monitor, after sending the preamble, the RAR on the time-frequency resource corresponding to the monitoring window with the length L. If the terminal device still receives no RAR after repeatedly sending the preamble signal for N times (a maximum quantity of retransmissions) on the RO in the PRACH resource set #1, it is considered that random access on the PRACH resource set #1 fails. Then, the terminal device performs a random access attempt by using a PRACH resource set #2, where the PRACH resource set #2 is a 2^{nd} PRACH resource set that is determined in the M PRACH resource sets based on the first sequence information and that is for performing random access attempt, and so on. Details are not described herein again.

Optionally, the configuration information of the PRACH resource set includes a length of a window for monitoring the RAR and/or a maximum quantity of retransmissions of the preamble signal.

S450: The network device sends the RAR signal to the terminal device. Correspondingly, the terminal device receives the RAR signal from the network device.

Optionally, the network device may further infer the capability of the terminal device based on the PRACH resource set #1, and set, based on the capability of the terminal device, a parameter used in a subsequent communication process. For example, the parameter may be a parameter of the RAR signal.

Optionally, in a four-step random access procedure, if the RAR includes scheduling information of Msg3, the configuration information of the PRACH resource set may further include a waveform parameter for sending the Msg3.

It should be understood that, sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (such as the terminal device or the network device) may also be implemented by a component (such as a chip or a circuit) of the device.

The methods provided in embodiments of this application are described above in detail with reference to FIG. 1 to FIG. 6. The foregoing methods are mainly described from a perspective of interaction between the terminal device and the network device. It may be understood that, to implement the foregoing functions, the terminal device and the network device include corresponding hardware structures and/or software modules for performing the functions.

A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

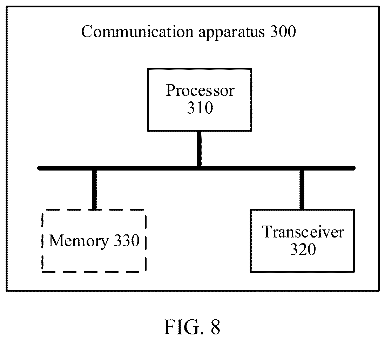

The following describes in detail communication apparatuses provided in embodiments of this application with reference to FIG. 7 and FIG. 8. It should be understood that, descriptions of apparatus embodiments correspond to the descriptions of the method embodiments. Therefore, for content that is not described in detail, refer to the foregoing method embodiments. For brevity, details of a part of content are not described herein again. In embodiments of this application, the terminal device or the network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

The foregoing describes in detail a data transmission method provided in this application, and the following describes the communication apparatuses provided in this application. In a possible implementation, the apparatus is configured to implement steps or procedures corresponding to the network device in the foregoing method embodiments. In another possible implementation, the apparatus is configured to implement steps or procedures corresponding to the terminal device in the foregoing method embodiments.

FIG. 7 is a block diagram of a communication apparatus 200 according to an embodiment of this application. As shown in FIG. 7, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the terminal device in the foregoing method embodiments. The processing unit 220 is configured to perform processing-related operations of the terminal device in the foregoing method embodiments, and the communication unit 210 is configured to perform sending-related operations of the terminal device in the foregoing method embodiments.

In another possible design, the apparatus 200 may implement steps or procedures performed by the network device in the foregoing method embodiments. The communication unit 210 is configured to perform receiving-related operations of the network device in the foregoing method embodiments, and the processing unit 220 is configured to perform processing-related operations of the network device in the foregoing method embodiments.

It should be understood that, the apparatus 200 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 200 may be specifically the terminal device in the foregoing embodiments, and may be configured to perform the procedures and/or steps corresponding to the terminal device in the foregoing method embodiments; or the apparatus 200 may be specifically the network device in the foregoing embodiments, and may be configured to perform the procedures and/or steps corresponding to the network device in the foregoing method embodiments. To avoid repetition, details are not described herein again.

The apparatus 200 in each of the foregoing solutions has functions of implementing the corresponding steps performed by the terminal device in the foregoing methods, or the apparatus 200 in each of the foregoing solutions has functions of implementing the corresponding steps performed by the network device in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 7 may be the terminal device or the network device in the foregoing embodiments, or may be a chip or a chip system, for example, a system-on-a-chip (system-on-a-chip, SoC). The communication unit may be an input/output circuit or a communication interface. The processing unit is a processor, a microprocessor, or an integrated circuit integrated on the chip. This is not limited herein.

FIG. 8 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store the instructions, and the processor 310 may execute the instructions stored in the memory 330. In a possible implementation, the apparatus 300 is configured to implement procedures and steps corresponding to the terminal device in the foregoing method embodiments. In another possible implementation, the apparatus 300 is configured to implement procedures and steps corresponding to the network device in the foregoing method embodiments.

It should be understood that, the apparatus 300 may be specifically the terminal device or the network device in the foregoing embodiments, or may be a chip or a chip system. Correspondingly, the transceiver 320 may be a transceiver circuit of the chip. This is not limited herein. Specifically, the apparatus 300 may be configured to perform the steps and/or procedures corresponding to the terminal device or the network device in the foregoing method embodiments. Optionally, the memory 330 may include a read-only memory and a random access memory, and provide instructions and data for the processor. A part of the memory may further include a nonvolatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the terminal device or the network device in the foregoing method embodiments.

In an implementation process, steps in the foregoing methods can be implemented by using a hardware integrated logic circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processing, DSP), an ASIC, a field programmable gate array (field programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and methods described in this specification includes but is not limited to these and any memory of another proper type.

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions, and when the computer instructions are run on a computer, operations and/or procedures performed by the terminal device or the network device in the method embodiments of this application are performed.

This application further provides a computer program product. The computer program product includes computer program code or instructions. When the computer program code or the instructions are/is run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that operations and/or processing performed by the terminal device or the network device in any method embodiment are/is performed.

Further, the chip may include a communication interface. The communication interface may be an input/output interface, an interface circuit, or the like. Further, the chip may include the memory.

In addition, this application further provides a communication system. The communication system includes the terminal device and the network device in embodiments of this application.

It should be further noted that, the memory described in this specification is intended to include, but not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separated, and parts displayed as units may or may not be physical units, may be located in one position, or may be distributed on a plurality of network units. A part of or all of the units may be selected according to actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for causing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that, ordinal numbers such as "first" and "second" in embodiments of this application are for distinguishing between a plurality of objects, but are not intended to limit a size, content, a sequence, a time sequence, priorities, importance, or the like of the plurality of objects. For example, first information and second information do not indicate a difference in an information amount, content, a priority, importance, or the like.

It should be further understood that, in this application, both "when" and "if' mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of' means two or more. "At least one of items (pieces)" or a similar expression thereof refers to one item (piece) or a plurality of items (pieces), that is, any combination of these items, including any combination of singular items (pieces) or plural items (pieces). For example, at least one of a, b, or c may represent a, b, c, a and b, a and c, b and c, or a, b, and c.

It should be further understood that, the term "and/or" in this specification describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that, in embodiments of this application, "B corresponding to A" indicates that B is associated with A, and B may be determined based on A. However, it should be further understood that, determining B based on A does not mean that B is determined based only on A. B may alternatively be determined based on A and/or other information.

## Claims

1. A resource configuration method, comprising:
receiving, by a terminal device, first information from a network device, wherein the first information comprises configuration information of N physical random access channel PRACH resource sets, and N is an integer greater than 1; and
performing, by the terminal device based on first sequence information, a random access attempt by using a part or all of M PRACH resource sets, wherein the M PRACH resource sets belong to the N PRACH resource sets, the first sequence information is for determining a sequence in which the terminal device performs random access attempt by using the M PRACH resource sets, and M is less than or equal to N.

2. The method according to claim 1, wherein the configuration information of the PRACH resource set comprises resource parameters corresponding to the PRACH resource set, and the resource parameters comprise a format parameter of a preamble signal, and a time and/or frequency resource parameter of the PRACH resource set.

3. The method according to claim 2, wherein the first information further comprises the first sequence information, and the first sequence information indicates a sequence of performing random access attempt by using the N PRACH resource sets.

4. The method according to claim 3, wherein the first sequence information is determined based on a first parameter corresponding to the N PRACH resource sets, and the first parameter comprises at least one of the resource parameters.

5. The method according to claim 2, wherein
the first sequence information is determined according to a first rule, wherein the first rule indicates to sort PRACH resource sets based on a first parameter, and the first parameter comprises at least one of the resource parameters.

6. The method according to claim 5, wherein the determining, by the terminal device, the first sequence information according to the first rule comprises:
determining, by the terminal device, the first sequence information based on the first rule and a capability of the terminal device.

7. The method according to claim 5 or 6, wherein the first rule is a rule indicated by the network device, or the first rule is a predefined rule.

8. The method according to any one of claims 1 to 7, wherein the method further comprises:
determining, by the terminal device, the M PRACH resource sets in the N PRACH resource sets based on the capability of the terminal device.

9. The method according to any one of claims 1 to 7, wherein the configuration information of the PRACH resource set further comprises information about a random access scenario to which the PRACH resource set is applicable, and information about a random access scenario corresponding to any one of the M PRACH resource sets matches information about a random access scenario initiated by the terminal device.

10. The method according to claim 9, wherein the information about the random access scenario to which the PRACH resource set is applicable comprises an identifier of the random access scenario to which the PRACH resource set is applicable, and/or a random access type to which the PRACH resource set is applicable.

11. The method according to any one of claims 1 to 10, wherein the configuration information of the PRACH resource set further comprises a parameter of a device to which the PRACH resource set is applicable, and a parameter of a device corresponding to any one of the M PRACH resource sets matches a parameter of the terminal device.

12. The method according to claim 11, wherein the parameter of the device to which the PRACH resource set is applicable comprises a capability parameter and/or a service requirement parameter of the device to which the PRACH resource set is applicable.

13. The method according to claim 12, wherein the capability parameter of the device comprises at least one of the following parameters:
a positioning capability level, a range of a quantity of transmit antennas, or a power saving level.

14. The method according to claim 12 or 13, wherein the service requirement parameter of the device comprises at least one of the following parameters:
a priority level of a service, a latency requirement level of the service, and a reliability level of the service.

15. The method according to any one of claims 1 to 14, wherein the method further comprises:
sending, by the terminal device, a first preamble signal to the network device on a first PRACH resource set, wherein the first PRACH resource set is one of the M PRACH resource sets; and
receiving, by the terminal device, a random access response signal from the network device, wherein a parameter of the random access response signal is determined based on the capability of the terminal device, and the capability of the terminal device is determined based on the first PRACH resource set.

16. A resource configuration method, comprising:
determining, by a network device, first information, wherein the first information comprises configuration information of N physical random access channel PRACH resource sets and first sequence information, the first sequence information indicates a sequence of performing random access attempt by using the N PRACH resource sets, and N is an integer greater than 1; and
sending, by the network device, the first information to the terminal device.

17. The method according to claim 16, wherein the configuration information of the PRACH resource set comprises resource parameters corresponding to the PRACH resource set, and the resource parameters comprise a format parameter of a preamble signal, and a time and/or frequency resource parameter of the PRACH resource set.

18. The method according to claim 17, wherein the first sequence information is determined based on a first parameter corresponding to the N PRACH resource sets, and the first parameter comprises at least one of the resource parameters.

19. The method according to any one of claims 16 to 18, wherein the configuration information of the PRACH resource set further comprises information about a random access scenario to which the RO resource is applicable.

20. The method according to claim 19, wherein the information about the random access scenario to which the PRACH resource set is applicable comprises an identifier of the random access scenario to which the PRACH resource set is applicable, and/or a random access type to which the PRACH resource set is applicable.

21. The method according to any one of claims 16 to 20, wherein the configuration information of the PRACH resource set further comprises a parameter of a device to which the PRACH resource set is applicable.

22. The method according to claim 21, wherein the parameter of the device to which the PRACH resource set is applicable comprises a capability parameter and/or a service requirement parameter of the device to which the PRACH resource set is applicable.

23. The method according to claim 22, wherein the capability parameter of the device comprises at least one of the following parameters:
a positioning capability level, a range of a quantity of transmit antennas, or a power saving level.

24. The method according to claim 22 or 23, wherein the service requirement parameter of the device comprises at least one of the following parameters:
a priority level of a service, a latency requirement level of the service, and a reliability level of the service.

25. The method according to any one of claims 16 to 24, wherein the method further comprises:
receiving, by the network device, a first preamble signal from the terminal device on a first PRACH resource set, wherein the first PRACH resource set is one of the N PRACH resource sets; and
sending, by the network device, a random access response signal to the terminal device, wherein a parameter of the random access response signal is determined based on a capability of the terminal device, and the capability of the terminal device is determined based on the first PRACH resource set.

26. A resource configuration method, comprising:
receiving, by a terminal device, configuration information ofN physical random access channel PRACH resource sets from a network device, wherein the configuration information of the PRACH resource set comprises information about a random access scenario to which the PRACH resource set is applicable, and N is an integer greater than 1;
determining, by the terminal device, a first PRACH resource set in the N PRACH resource sets, wherein information about a random access scenario corresponding to the first PRACH resource set matches information about a random access scenario initiated by the terminal device; and
performing, by the terminal device, random access based on the first PRACH resource set.

27. A resource configuration method, comprising:
determining, by a network device, configuration information of N physical random access channel PRACH resource sets, wherein the configuration information of the PRACH resource set comprises information about a random access scenario to which the PRACH resource set is applicable, and N is an integer greater than 1; and
sending, by the network device, the configuration information of the N physical random access channel PRACH resource sets to a terminal device.

28. The method according to claim 26 or 27, wherein the information about the random access scenario to which the PRACH resource set is applicable comprises an identifier of the random access scenario to which the PRACH resource set is applicable, and/or a random access type to which the PRACH resource set is applicable.

29. A resource configuration method, comprising:
receiving, by a terminal device, configuration information ofN physical random access channel PRACH resource sets from a network device, wherein the configuration information of the PRACH resource set comprises a parameter of a device to which the PRACH resource set is applicable, and N is an integer greater than 1;
determining, by the terminal device, a first PRACH resource set in the N PRACH resource sets, wherein a parameter of a device corresponding to the first PRACH resource set matches a parameter of the terminal device; and
performing, by the terminal device, random access based on the first PRACH resource set.

30. A resource configuration method, comprising:
determining, by a network device, configuration information of N physical random access channel PRACH resource sets, wherein the configuration information of the PRACH resource set comprises a parameter of a device to which the PRACH resource set is applicable, and N is an integer greater than 1; and
sending, by the network device, the configuration information of the N physical random access channel PRACH resource sets to a terminal device.

31. The method according to claim 29 or 30, wherein the parameter of the device to which the PRACH resource set is applicable comprises a capability parameter and/or a service requirement parameter of the device to which the PRACH resource set is applicable.

32. The method according to claim 31, wherein the capability parameter of the device comprises at least one of the following parameters:
a positioning capability level, a range of a quantity of transmit antennas, or a power saving level.

33. The method according to claim 31 or 32, wherein the service requirement parameter of the device comprises at least one of the following parameters:
a priority level of a service, a latency requirement level of the service, and a reliability level of the service.

34. The method according to any one of claims 26 to 33, wherein the configuration information of the PRACH resource set comprises physical random access channel resource parameters corresponding to the PRACH resource set, and the resource parameters comprise a format parameter of a preamble signal, and a time and/or frequency resource parameter of the PRACH resource set.

35. A communication apparatus, comprising a module or a unit configured to perform the method according to any one of claims 1 to 15, comprising a module or a unit configured to perform the method according to any one of claims 16 to 25, comprising a module or a unit configured to perform the method according to any one of claims 26, 28, and 34, comprising a module or a unit configured to perform the method according to any one of claims 27, 28, and 34, comprising a module or a unit configured to perform the method according to any one of claim 29 or claims 31 to 34, or comprising a module or a unit configured to perform the method according to any one of claims 30 to 34.

36. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 1 to 15, perform the method according to any one of claims 16 to 25, perform the method according to any one of claims 26, 28, and 34, perform the method according to any one of claims 27, 28, and 34, perform the method according to any one of claim 29 or claims 31 to 34, or perform the method according to any one of claims 30 to 34.

37. A computer-readable storage medium, wherein the computer-readable storage medium stores computer instructions, and when the computer instructions are run on a computer, the method according to any one of claims 1 to 15 is performed, the method according to any one of claims 16 to 25 is performed, the method according to any one of claims 26, 28, and 34 is performed, the method according to any one of claims 27, 28, and 34 is performed, the method according to any one of claim 29 or claims 31 to 34 is performed, or the method according to any one of claims 30 to 34 is performed.

38. A computer program product, wherein the computer program product comprises computer program code, and when the computer program code is run on a computer, the method according to any one of claims 1 to 15 is performed, the method according to any one of claims 16 to 25 is performed, the method according to any one of claims 26, 28, and 34 is performed, the method according to any one of claims 27, 28, and 34 is performed, the method according to any one of claim 29 or claims 31 to 34 is performed, or the method according to any one of claims 30 to 34 is performed.

39. A communication system, comprising a terminal device and a network device, wherein
the terminal device is configured to perform the method according to any one of claims 1 to 15, and the network device is configured to perform the method according to any one of claims 16 to 25;
the terminal device is configured to perform the method according to any one of claims 26, 28, and 34, and the network device is configured to perform the method according to any one of claims 27, 28, and 34; or
the terminal device is configured to perform the method according to any one of claim 29 or claims 31 to 34, and the network device is configured to perform the method according to any one of claims 30 to 34.
